# EUROPEAN PATENT SPECIFICATION

(11) **EP 3 522 465 B1**
(45) Date of publication and mention of the grant of the patent: **05.08.2026**
(21) Application number: 17854896.2
(22) Date of filing: 27.09.2017
(51) Int. Cl.: H04J 3/16

(54) **SERVICE DATA TRANSMISSION METHOD, DEVICE AND SYSTEM, AND STORAGE MEDIUM**
VERFAHREN, VORRICHTUNG UND SYSTEM ZUR ÜBERTRAGUNG VON DIENSTDATEN UND SPEICHERMEDIUM
PROCÉDÉ, DISPOSITIF ET SYSTÈME DE TRANSMISSION DE DONNÉES DE SERVICE, ET SUPPORT DE STOCKAGE

(30) Priority: 29.09.2016 CN 201610866553
(43) Date of publication of application: 07.08.2019
(73) Proprietor: ZTE Corporation, Shenzhen, Guangdong 518057 (CN)
(72) Inventor: LIU, Feng, Shenzhen Guangdong 518057 (CN)
(74) Representative: Aipex B.V.
(86) International application number: PCT/CN2017/103695
(87) International publication number: WO 2018/059446

(56) References cited:
- EP-A1- 2 741 454
- EP-A1- 2 975 858
- EP-A1- 3 013 017
- CN-A- 1 909 538
- CN-A- 101 645 762
- # OIF: "IA OIF-FLEXE-01.0 Flex Ethernet Implementation Agreement", 1 March 2016 (2016-03-01), pages 1 - 31, XP055459137, Retrieved from the Internet <URL:http://www.oiforum.com/wp-content/uploads/OIF-FLEXE-01.0.pdf> [retrieved on 20180314]

## Description

This disclosure is based on and claims priority to a Chinese patent application No. 201610866553.4 filed on September 29, 2016.

### TECHNICAL FIELD

The present invention relates to network communication technologies and, in particular, to a method and device for transmitting traffic data, and a system and a storage medium.

### BACKGROUND

The rapid development of network technologies and the rapid increase of network information traffic have facilitated the rapid development of the transmission bandwidth of communication networks. The interface bandwidth speed of the communication device is increased from 10M (unit: bit/second) to 100M, and then increased to 1G and 10G. Currently, the interface bandwidth speed of 100G has been achieved, and a large number of commercial 100G optical modules have been put on the market.

At present, 400G optical module has been developed, but the 400G optical module is expensive, exceeding the price of four 100G optical modules, causing that the 400G optical module lacks commercial economic value. Therefore, in order to transmit 400G services on 100G optical modules, International Organization for Standardization has defined the Flexible Ethernet (FLEXE) protocol.

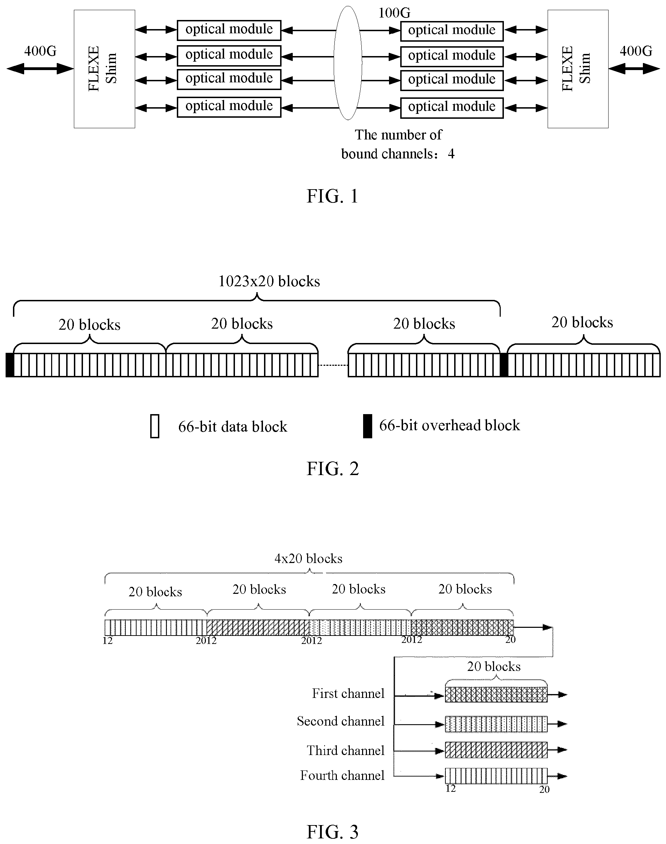

The basic content of the FLEXE protocol is to bind multiple 100G transmission channels to form a transmission channel having a larger bandwidth speed. As shown in FIG. 1, a FLEXE shim is added between the MAC layer and the physical coding sublayer (PCS) through the FLEXE protocol, and four 100G physical channels are bound through the FLEXE shim so as to form a 400G logical channel, thereby meeting the transmission requirement of the 400G traffic without increasing the cost.

Currently, the FLEXE protocol defines 20 slots on a single 100G physical line. The bandwidth of each slot is 5G, and accordingly, 4x20 slots are defined on the 4x100G logical channel, and the bandwidth of each slot is specified as 5G. The number of slots and the slot bandwidth defined by the FLEXE protocol can meet the traffic transmission requirement of the optical transport network (OTN). However, when the FLEXE protocol is applied to the field of the packet transport network (PTN), the following problems will be encountered.
1. Only 20 slots are defined for the 100G physical channel, so the total number of slots is too small. 2. The bandwidth of each slot is 5G, which causes the granularity of a single slot to be too large. In the field of the PTN traffic, the customer traffic is massive, and the bandwidth of each piece of traffic is relatively small, that is, the number of slots is large, and the granularity of the bandwidth of the single slot is small, which causes the current FLEXE protocol cannot meet the application scenario of the PTN traffic. Further relevant technologies are also known from # 0if: "IA 0IF-FLEXE-01.0 Flex Ethernet Implementation Agreement", 1 March 2016 (2016-03-01), pages 1-31, XP05545913, EP 2 741 454 A1 (HUAWEI TECH CO LTD [CN]) 11 June 2014 (2014-06-11) which relates to a method and an apparatus for transporting an ultra-high-speed Ethernet service, and EP 2 975 858 A1 (HUAWEI TECH CO LTD [CN]) 20 January 2016 (2016-01-20) which relates to a method for processing data in the Ethernet, a physical layer chip and an Ethernet device.

### SUMMARY

Embodiments of the present invention are desirable to provide a method and device for transmitting traffic data and system as defined in the attached independent claims to solve the problem that the PTN traffic is not applicable to the physical channel of the FLEXE. Further improvements are provided in the dependent claims.

The technical solution of the present invention is implemented as follows.

Also provided is a method for transmitting traffic data, including:
determining, by a transmitting end, a position of a bearing slot for bearing traffic data to be transmitted;
determining, by the transmitting end, a position of a bearing data block group for bearing the traffic data to be transmitted; and
transmitting, by the transmitting end, according to the position of the bearing slot and the position of the bearing data block group, the traffic data to be transmitted;
wherein before determining, by the transmitting end, the position of the bearing slot for bearing the traffic data to be transmitted, the method further comprises: numbering, by the transmitting end, slots in a calendar of a Flexible Ethernet, FlexE, protocol, and numbering data block groups within a coverage area of an overhead block;
wherein the FlexE protocol is used to bind multiple 100G transmission channels to form a transmission channel having a larger bandwidth speed, the FlexE protocol defines 20 slots on each 100G transmission channel, slots in the calendar of the FlexE protocol include slots on multiple 100G transmission channels and a bandwidth of each slot is 5G;
wherein the data block groups within the coverage area of the overhead block include 1023 data block groups, and each of the 1023 data block groups includes 20 66 bit data blocks representing 20 slots;
wherein the determining, by the transmitting end, the position of the bearing slot for bearing traffic data to be transmitted comprises: determining, by the transmitting end, according to traffic slot configuration, a slot number of the bearing slot for bearing the traffic data to be transmitted; and
wherein the determining, by the transmitting end, the position of the bearing data block group for bearing the traffic data to be transmitted comprises: determining, by the transmitting end, according to traffic bandwidth configuration, a data block group number of the bearing data block group for bearing the traffic data to be transmitted.

Also provided is a method for receiving traffic data, including:
determining, by a receiving end, a position of a receiving data block group for bearing traffic to be received; and
determining, by the receiving end, in the position of the receiving data block group, a position of a receiving slot for bearing the traffic to be received, and extracting the traffic to be received at the position of the receiving slot;
wherein the receiving slot is a slot in slots in a calendar of a Flexible Ethernet, FlexE, protocol, the receiving data block group is a data block group in data block groups within a coverage area of an overhead block, the position of the slot is represented by a slot number, and the position of the data block group is represented by a data block group number;
wherein the FlexE protocol is used to bind multiple 100G transmission channels to form a transmission channel having a larger bandwidth speed, the FlexE protocol defines 20 slots on each 100G transmission channel, slots in the calendar of the FlexE protocol include slots on multiple 100G transmission channels and a bandwidth of each slot is 5G;
wherein the data block groups within the coverage area of the overhead block include 1023 data block groups, and each of the 1023 data block groups includes 20 66 bit data blocks representing 20 slots;
wherein the determining, by the receiving end, the position of the receiving data block group for bearing the traffic to be received comprises: determining, by the receiving end, according to traffic bandwidth configuration, the data block group number of the receiving data block group for transmitting the traffic to be received;
wherein the determining, by the receiving end, in the receiving data block group, the position of the receiving slot for bearing the traffic to be received, and extracting the traffic to be received at the receiving slot position comprises: in response to the data block group number meeting a preset receiving condition, determining, by the receiving end, in the receiving data block group corresponding to the data block group number, according to traffic slot configuration, the slot number of the receiving slot for bearing the traffic to be received, and obtaining, according to the slot number, the traffic to be received from the slot corresponding to the receiving slot number.

Also provided is a transmitter device, including a first determining module, a second determining module and a transmitting module.

The first determining module is configured to determine a position of a bearing slot for bearing traffic data to be transmitted.

The second determining module is configured to determine a position of bearing data block group for bearing the traffic data to be transmitted.

The transmitting module is configured to transmit, according to the position of the bearing slot and the position of the bearing data block group, the traffic data to be transmitted.

The device further comprises a numbering module, the numbering module is configured to number slots in a calendar of a Flexible Ethernet, FlexE, protocol, and number data block groups within a coverage area of an overhead block.

The FlexE protocol is used to bind multiple 100G transmission channels to form a transmission channel having a larger bandwidth speed, the FlexE protocol defines 20 slots on each 100G transmission channel, slots in the calendar of the FlexE protocol include slots on multiple 100G transmission channels and a bandwidth of each slot is 5G.

The data block groups within the coverage area of the overhead block include 1023 data block groups, and each of the 1023 data block groups includes 20 66 bit data blocks representing 20 slots.

The first determining module is configured to determine the position of the bearing slot for bearing traffic data to be transmitted in the following manner: determining, according to traffic slot configuration, a slot number of the bearing slot for bearing the traffic data to be transmitted.

The second determining module is configured to determine the position of the bearing data block group for bearing the traffic data to be transmitted in the following manner: determining, according to traffic bandwidth configuration, a data block group number of the bearing data block group for bearing the traffic data to be transmitted.

In a fifth aspect, also provided is a receiver device, including a third determining module, a fourth determining module and an extracting module.

The third determining module is configured to determine a position of a receiving data block group for bearing traffic to be received.

The fourth determining module is configured to determine, in the position of the receiving data block group, a position of a receiving slot for bearing the traffic to be received.

The extracting module is configured to extract the traffic to be received at the position of receiving slot.

The receiving slot is a slot in slots in a calendar of a Flexible Ethernet, FlexE, protocol, the receiving data block group is a data block group in data block groups within a coverage area of an overhead block, the position of the slot is represented by a slot number, and the position of the data block group is represented by a data block group number.

The FlexE protocol is used to bind multiple 100G transmission channels to form a transmission channel having a larger bandwidth speed, the FlexE protocol defines 20 slots on each 100G transmission channel, slots in the calendar of the FlexE protocol include slots on multiple 100G transmission channels and a bandwidth of each slot is 5G.

The data block groups within the coverage area of the overhead block include 1023 data block groups, and each of the 1023 data block groups includes 20 66 bit data blocks representing 20 slots.

The third determining module is configured to determine the position of the receiving data block group for bearing traffic to be received in the following manner: determining, according to traffic bandwidth configuration, the data block group number of the receiving data block group for bearing the traffic to be received,

The fourth determining module is configured to determine, in the receiving data block group, the position of the receiving slot for bearing the traffic to be received in the following manner: in response to the data block group number meeting a preset receiving condition, determining, in the receiving data block group corresponding to the receiving data block group number, according to traffic slot configuration, the slot number of the receiving slot for bearing the traffic to be received.

The extracting module is configured to extract the traffic to be received at the receiving slot in the following manner: obtain, according to the slot number, the traffic to be received from the receiving slot corresponding to the receiving slot number.

The embodiments of the present invention provide a method and device for transmitting traffic data, a traffic bearing system, and a storage medium. The transmitting end, in the process of transmitting traffic data, configures slots, and also configures data block groups, and further performs the transmission scheduling and the data transmission on the granularity of the data block groups, so that the transmitting end can configure the transmission of the traffic data from multiple dimensions, thereby increasing the number of traffic transmission slots of the physical channel in the FLEXE protocol, decreasing the slot granularity, and enabling the FLEXE protocol to meet the scenario requirements of the PTN traffic.

### BRIEF DESCRIPTION OF DRAWINGS

FIG. 1 is a diagram of an FLEXE network structure according to an embodiment of the present invention;
FIG. 2 is a schematic diagram of a coverage area of an overhead block according to an embodiment of the present invention;
FIG. 3 is a schematic diagram of data transmission in the FLEXE network structure according to an embodiment of the present invention;
FIG. 4 is a structural diagram of an overhead frame according to an embodiment of the present invention;
FIG. 5 is a schematic diagram of a coverage area of an overhead frame according to an embodiment of the present invention;
FIG. 6 is a flowchart of a traffic bearing method according to an embodiment of the present invention;
FIG. 7 is a schematic diagram of traffic bearing in the FLEXE network structure according to an embodiment of the present invention;
FIG. 8 is a flowchart of another traffic bearing method according to an embodiment of the present invention;
FIG. 9 is a flowchart of another traffic bearing method according to an embodiment of the present invention;
FIG. 10 is a structural diagram of a transmitter device according to an embodiment of the present invention;
FIG. 11 is a structural diagram of another transmitter device according to an embodiment of the present invention;
FIG. 12 is a structural diagram of a receiver device according to an embodiment of the present invention; and
FIG. 13 is a structural diagram of a traffic bearing system according to an embodiment of the present invention.

### DETAILED DESCRIPTION

Technical solutions in embodiments of the present invention will be described clearly and completely in conjunction with the drawings in the embodiments of the present invention. The embodiments described below are intended to describe and explain the present invention, and not to limit the present invention which solely defined by the appended claims.

In an optical module, a 100G data packet is subjected to 64/66 encoding before being transmitted. That is, 64-bit data is expanded into a 66-bit data block, and the added 2 bits are disposed at the head of the 66-bit data block as a start flag of the 66-bit data block. Next, the 100G data packet is sent out from the optical port in the form of the 66-bit data block. In the receiving process, the optical port identifies the 66-bit data block from the received data stream, recovers the original 64-bit data from the 66-bit data block, and obtains the data packet by reassembling.

The FLEXE protocol is on the block transformation layer from the 64-bit data to the 66-bit data block. Before transmitting the 66-bit data block, the transmitting end sorts and plans the 66-bit data block. As shown in FIG. 2, the white block represents a 66-bit data block. For the 100G traffic, every 20 66-bit data blocks are grouped into one data block group. The 20 66-bit data blocks included in the data block group represent 20 slots, and each slot represents the traffic speed of the 5G bandwidth. In the transmitting process of the 66-bit data blocks, the transmitting end inserts a FLEXE overhead block every time 1023 data block groups (i.e., 1023 × 20 data blocks) are transmitted. The FLEXE overhead block is represented by the black block shown in FIG. 2. After the FLEXE overhead block is inserted, the transmitting end continues to transmit the data block. After the second 1023 × 20 data blocks are transmitted, the FLEXE overhead block is inserted again. The data length of the FLEXE overhead block is also 66 bits. In this way, in the transmitting process of the data blocks, the FLEXE overhead block is periodically inserted and the interval between two adjacent FLEXE overhead blocks is 1023 × 20 data blocks. The data block groups are introduced in this embodiment, the resource granularity corresponding to the data block groups is greater than the resource granularity corresponding to the slots. In this way, according to data volume and/or transmission requirements of the current traffic data, the traffic data can be transmitted flexibly based on the data block groups and/or slots.

In the process of binding multiple physical channels having a small bandwidth speed into a logical channel having a lager bandwidth speed by using the FLEXE protocol, the transmitting end transmits all data block groups to the multiple physical channels having the small bandwidth speed in an averagely polling way, so that the data blocks on all physical channels are fully aligned during transmission. The transmitting end inserts the overhead blocks every 1023 data block groups on each physical channel, so that the data blocks on the physical channels are completely aligned and the overhead blocks on the physical channels are completely aligned. In the exemplary FLEXE network structure shown in FIG. 1, four 100G physical channels are bound into a 400G logical channel. As shown in FIG. 3, the first data block group, that is, the first 20 data blocks, is transmitted to the first physical channel; the second data block group, that is, the second 20 data blocks, is transmitted to the second physical channel; the third data block group, that is, the third 20 data blocks, is transmitted to the third physical channel; the fourth data block group, that is, the fourth 20 data blocks, is transmitted to the fourth physical channel; the fifth data block group, that is, the fifth 20 data blocks, is transmitted to the first physical channel, and so on. In this way, all data block groups are transmitted to the four physical channels in the averagely polling manner and a modulo 4 manner. The data blocks on the four physical channels are fully aligned during transmission, and the overhead block is inserted every 1023 data block groups on each of the four physical channels, so that the data blocks on the four physical channels are completely aligned and the overhead blocks on the four physical channels are also completely aligned.

At the receiving end, each physical channel separately receives the data block and determines the position of the overhead block. Each physical channel takes the position of the overhead block as the benchmark, such that the data block groups on the four physical channels are realigned. After the data block groups on the four physical channels are aligned based on the position of the overhead block, the data block groups on the four physical channels are reordered according to the reverse process of the transmission with polling allocation. That is, the first data block group after the overhead block on the first physical channel is obtained firstly and placed in front; next, the first data block group after the overhead block on the second physical channel is obtained and placed after the first data block group from the first physical channel; next, the first data block group after the overhead block on the third physical channel is obtained and placed after the first data block group from the second physical channel, and the first data block group after the overhead block on the fourth physical channel is obtained and placed after the first data block group from the third physical channel. The above process is repeated. The second data block group after the overhead block on the first physical channel is obtained and placed after the first data block group from the fourth physical channel, and then the second data block group after the overhead block on the second physical channel is obtained placed after the second data block group from the first physical channel, and so on. In this way, the data block groups of the four physical channels are reordered into a large logical channel data block group.

In this way, the four physical channels are bound into a large logical channel. In the perspective of traffic, the user only senses the large logical channel and transmits traffic through the large logical channel and does not need to know the underlying four physical channels.

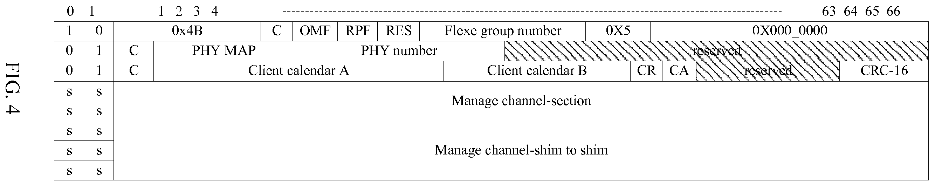

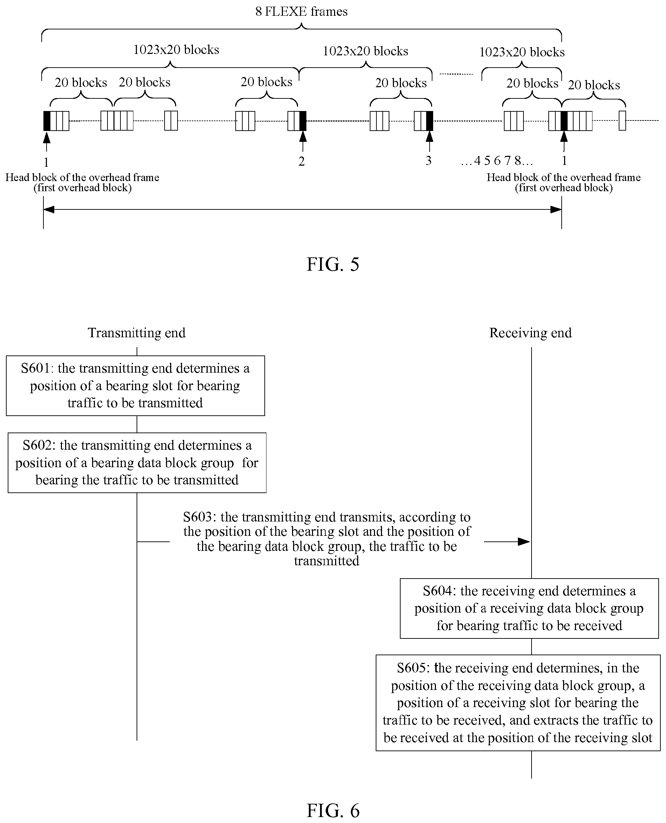

For the FLEXE overhead blocks, it is to be noted that the data length of one FLEXE overhead block is also 66 bits. Since the overhead block is inserted every 1023 × 20 data blocks when the data stream is transmitted, the overhead block has a positioning function for the entire data stream. That is, the position of the first data block group and the positions of subsequent data block groups in the entire data stream may be known by locating the overhead block. The current FLEXE overhead block is shown in FIG. 4. In the FLEXE protocol, eight continuous overhead blocks form an overhead frame. Therefore, as shown in FIG. 5, the coverage area of one overhead frame is 8 × 1023 × 20 data blocks (represented by the white blocks) and eight overhead blocks (represented by the black blocks). In this embodiment, the data block and the overhead block are both referred to as an information block, and accordingly, the coverage area of one overhead frame is 8 × (1023 × 20 + 1) information blocks.

As shown in FIG. 4, one overhead block includes a 2-bit block flag and 64-bit block content. The block flag is deposed in first two columns, and next 64 columns are the block content. The block flag of the first overhead block is 10, and the block flags of the next seven overhead blocks are 01 or SS (SS means that the content is uncertain). The content of the first overhead block is: 0×4B (8 bits, hexadecimal 4B), C bit (1 bit, indicating adjustment control), OMF bit (1 bit, representing an overhead multiframe indicator), RPF bits (1 bit, representing a remote end defect indication), RES bit (1 bit, a reserved bit), FLEXE group number (20 bits, representing the number of the binding group), 0×5 (4 bits, hexadecimal 5), and 000000 (28 bits, all 0s). 0 ×4B and 0x5 are a flag indication of the first overhead block. In reception, when a corresponding position in an obtained overhead block is 0 ×4B and 0×5, it means that the overhead block is the first overhead block of the overhead frame, and this overhead block and the subsequent seven continuous overhead blocks constitute one overhead frame. In the overhead frame, the reserved part is a reserved field, which has not been defined yet, as shown by the block with diagonal lines in FIG. 4. The other bytes in the overhead block are unrelated to the technical solutions of the embodiments of the present invention, and therefore will not be specifically described.

Based on the example of the FLEXE network structure and data transmission manner described above, in the technical solutions provided by the embodiments of the present invention, the transmitting end, in the process of transmitting the traffic data, in addition to configures slots, also configures the data block groups, so that the transmitting end can configure the transmission of the traffic data from multiple dimensions, thereby increasing the total number of the traffic transmission, decreasing the bandwidth of each piece of the traffic data, increasing the number of the slots and decreasing the granularity of the slots.

In the embodiments of the present invention, the traffic data to be transmitted may be simply referred to as traffic to be transmitted. One or more embodiments will be described below in conjunction with the drawings and embodiments. It is to be noted that these embodiments are intended to explain the technical solutions of the present invention and not to limit the present invention.

### Embodiment one

Referring to FIG. 6, a traffic bearing method provided by an embodiment of the present invention is shown. This embodiment uses a FLEXE network structure shown in FIG. 1 as an example for illustration. The FLEXE network structure includes a traffic transmitting end and a traffic receiving end. The method includes the steps described below.

In step S601, the transmitting end determines a position of a bearing slot for bearing traffic to be transmitted.

In step S602, the transmitting end determines a position of a bearing data block group for bearing the traffic to be transmitted.

In step S603, the transmitting end transmits, according to the position of the bearing slot and the position of the bearing data block group, the traffic to be transmitted.

In step S604, the receiving end determines a position of a receiving data block group for bearing traffic to be received.

In step S605, the receiving end determines, in the position of the receiving data block group, a position of a receiving slot for bearing the traffic to be received, and extracts the traffic to be received at the position of the receiving slot.

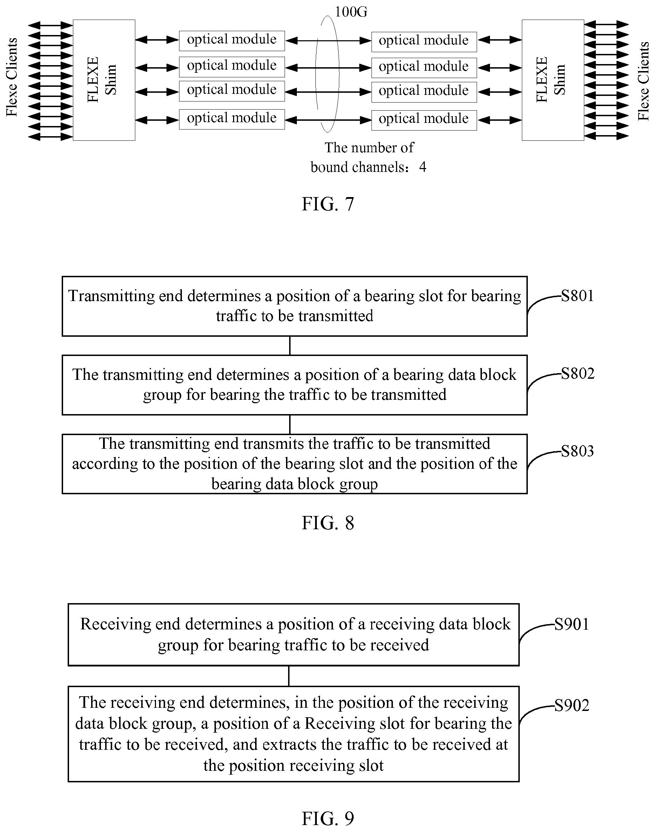

It is to be noted that, for a FLEXE protocol, at the process of bearing custom traffic, as shown in FIG. 7, the custom traffic is only mapped to a FLEXE shim layer. A single physical channel can only identify 20 slots in the FLEXE shim layer and each slot has a bandwidth of 5G. In the case of a single 100G physical line, since the FLEXE shim layer only has 20 slots, the FLEXE shim layer can bear 20 pieces of custom traffic at most and a maximum bandwidth of each piece of custom traffic is 5G. In the scheme where four 100G physical channels are bound into a 400G logical channel, the FLEXE shim layer only has 4x20 slots at most, and each slot has the a bandwidth of 5G.

The slot quantity and the slot granularity defined by the FLEXE protocol may meet scenarios of OTN traffic. However, in scenarios of the PTN traffic, the number of customer traffic is large. Even if a total bandwidth of all custom traffic is not more than 100G, the custom traffic may be massive, reaching one thousand and even dozens of thousands pieces of custom traffic, which is far greater than the 20 slots defined in the FLEXE protocol. In view of above, in the scenarios of the PTN traffic, the bandwidth of a single piece of traffic may be small, and the minimum bandwidth may be 10M. If the slot with the bandwidth of 5G specified in the FLEXE protocol is used for transmitting the 10M traffic data, a serious bandwidth waste is caused.

For the technical solution shown in FIG. 6, in addition to configuring the slots, the data block groups for bearing the traffic are further configured. Since the coverage area of one overhead block has 1023 data block groups, each data block group includes 20 66-bit data blocks, that is, 20 slots. In the FLEXE protocol, the shim layer has 20 × n slots, and n represents the number of bound physical channels. If traffic data bore by each data block group is configured, the number of slots bearing traffic is expanded from 20 × n to 1023 × 20 × n. The number of slots has expanded by 1023 times and, at the same time, the granularity of each slot is decreased from 5G to 0.004888G (a result of dividing 5G by 1023). The granularity of the expanded slot is approximately 4.888M, which is suitable to the case where the number of custom traffic is large and the bandwidth of the single piece of traffic is small in the scenarios of the PTN traffic.

In the process of implementing the technical solution shown in FIG. 6, before the step S601, the method further includes:
The transmitting end numbers slots in a calendar of the FLEXE protocol, and numbers data block groups within a coverage area of an overhead block.

The transmitting end numbers the 20 × n slots in the calendar, which is simply referred to as the slot number, such as 1, 2, 3... 20 × n - 1, and 20 × n. n is the number of physical channels bound together, such as the number of Ethernet physical layers. Since the coverage area of one overhead block has 1023 data block groups, and each data block group has 20 × n 66-bit data blocks, the transmitting end numbers the data block groups, which is simply referred to as the data block group number, such as 1, 2, 3... 1022 and 1023. It is to be understood that after the slots and the data block groups are configured with numbers, the position of the slot and the position of the data block group are separately represented by the slot number and the data block group number.

After the transmitting end numbers the slots and the data block groups, the step S601 in which the transmitting end determines the position of the bearing slot for bearing the traffic to be transmitted includes:
Transmitting end determines, according to traffic slot configuration, the number of the bearing slot for bearing the traffic to be transmitted.

The step S602 in which the transmitting end determines the position of the bearing data block group for bearing the traffic to be transmitted includes:
The transmitter determines, according to traffic bandwidth configuration, the number of the bearing slot for bearing the traffic to be transmitted.

Alternatively, the step S603 in which the transmitter end transmits, according to the position of the bearing slot and the position of the bearing data block group, the traffic to be transmitted may include:
The transmitter end uses a FLEXE data frame to carry the traffic to be transmitted according to the number of the bearing slot and the number of the bearing data block group, and sends the traffic to be transmitted to the receiving end with the FLEXE data frame.

Since the position of the slot and the position of the data block group may be separately represented by the slot number and the data block group number. For the receiving end, the step S604 in which the receiving end determines a position of the receiving data block group for bearing traffic to be received includes:
The receiving end determines, according to traffic bandwidth configuration, the receiving data block group number of a receiving data block group for transmitting the traffic to be received.

Correspondingly, the step S605 in which the receiving end determines, in the position of the receiving data block group, a position of the receiving slot for bearing the traffic to be received, and extracts the traffic to be received at the position of the receiving slot includes:
in response to the receiving data block group number meeting a preset receiving condition, determining, by the receiving end, in the receiving data block group corresponding to the receiving data block group number, according to traffic slot configuration, the receiving slot number of the receiving slot for bearing the traffic to be received, and obtains, according to the receiving slot number, the traffic to be received from the slot position corresponding to the receiving slot number.

It is to be noted that for the technical solution described above, the traffic to be transmitted that is sent by the transmitting end is the traffic to be received that is received by the receiving end, which will not be described in this embodiment. In addition, the transmitting end and the receiving end will negotiate to determine the position of the transmission slot and the position of the transmission data block group in the FLEXE frame for each traffic data, so that traffic configuration information is consistent for the receiving direction and the transmitting direction. That is, the transmitting direction in transmission is determined according to traffic configuration and correspondingly the receiving direction in reception also is determined according to the same configuration.

In this way, each piece of traffic data has configuration information of two dimensions when configured on the shim layer. The configuration information includes the slot position and the data block group position. The traffic is transmitting on the slot in the slot block group where both the slot value and block group value meet the requirements.

According to the method for transmitting traffic data, the transmitting end, in the process of transmitting the traffic data, not only configures the slots, but also configures the data block groups, so that the transmitting end can configure the transmission of the traffic data in multiple dimensions, thereby increasing the number of traffic transmission slots of the physical channel in the FLEXE protocol, decreasing the slot granularity, and enabling the FLEXE protocol to meet the requirements of the PTN traffic scenario.

### Embodiment two

Based on the embodiment described above, this embodiment uses an example to illustrate the technical solution of the above embodiment.

For example, three pieces of traffic are provided, i.e., traffic A, traffic B and traffic C. The bandwidth of data of the traffic A is 2.5G, the bandwidth of data of the traffic B is 7.5G and the bandwidth of data of the traffic C is 1.25G.

Therefore, the transmitting end configures the slot number {1} and the data block group numbers {odd numbers, such as 1, 3, 5...} for the traffic data of the traffic A. That is, the transmitting end uses a slot whose slot number is 1 in the data block group whose data block group number is odd for carrying the data of the traffic A. Correspondingly, the receiving end receives the data block at the slot whose slot number is 1 in the data block group whose data block group number is odd.

For the traffic data of the traffic B, positions for bearing the traffic data of the traffic B configured by the transmitting end include two groups. The first group of configured positions are a slot number {1} and block group numbers {even numbers such as 2, 4, 6}. The second group of configured positions are a slot number {2} and block group numbers {all numbers, such as 1,2,3... }. It can be seen that the bandwidth of the first group of configured positions is 2.5G (approximately equals to 2.5G, and actually slightly smaller than 2.5G because there are totally 1023 block groups, if these block groups are numbered with 1, 2, 3 ... 1022 and 1023, there are 512 odd numbers and 511 even numbers, and the even numbers are slightly less than the odd numbers) and the bandwidth of the second group of configured positions is 5G. The bandwidth of the two groups is totally 7.5G.

For the traffic data of the traffic C, the positions for bearing the traffic data of the traffic C configured by the transmitting end are a slot number {3} and block group numbers {numbers equal to 4n+1, such as 1, 5, 9, 13}. In this way, the bandwidth bearing the traffic data of the traffic C approximately equals to 1.25G. That is, the 5G slot bandwidth is divided into 4 groups and the traffic data of the traffic C is transmitted on the first group of slots.

In the mode where n 100G physical channels are bound into a 400G logical channel, the number of slots is changed from 20 to 20 × n.

It is to be understood that the technical solution of this embodiment may also has various and flexible modifications, for example:
(1). The numbering manner of the slots may be 1, 2, 3...20*n-1 and 20*n, or may be 0, 1, 2, 3... 20*n-2 and 20*n-1, which is not limited in this embodiment;
(2). The numbering manner of the block groups may be 1, 2, 3... 1021 and 1023, or may be 0, 1, 2, 3... 1021 and 1022, and may also be other regular numbering manners, which is not limited in this embodiment;
(3). The existing FELXE protocol defines that one overhead block is inserted into for every 1023 data block groups and the coverage area of the overhead block is 1023 data block groups. If the FELXE protocol is modified, the number of data block groups between two overhead blocks may be modified to other values, the block group numbers within the coverage area of the overhead block also correspond to the modified values.

### Embodiment three

Based on the embodiments described above, referring to FIG. 8, a traffic bearing method provided by an embodiment of the present invention is shown. The method may be applied to a transmitting end in a FLEXE network structure shown in FIG. 1, and includes the following steps.

In step S801, the transmitting end determines a position of a bearing slot for bearing traffic to be transmitted.

In step S802, the transmitting end determines a position of a bearing data block group for bearing the traffic to be transmitted.

In step S803, the transmitting end transmits, according to the position of the bearing slot and the position of the bearing data block group, the traffic to be transmitted.

Before the step S801, the method further includes:
The transmitting end numbers slots in a calendar of the FLEXE protocol, and numbers data block groups within a coverage area of an overhead block.

The transmitting end numbers 20 × n slots in the calendar, which is simply referred to as the slot number, such as 1, 2, 3...20 × n - 1 and 20 × n. n is the number of physical channels bound together, such as the number of Ethernet physical layers. Since the coverage area of one overhead block has 1023 data block groups, and each data block group has 20 × n 66-bit data blocks, the transmitting end numbers the data block groups, which is simply referred to as the data block group number, such as 1, 2, 3... 1022 and 1023. It is to be understood that after the slots and the data block groups are numbered, the position of the slot and the position of the data block group are separately represented by the slot number and the data block group number.

After the transmitting end numbers the slots and the data block groups, the step S801 in which the transmitting end determines the position of the bearing slot for bearing the traffic to be transmitted includes:
The transmitting end determines, according to traffic slot configuration, the number of the bearing slot for bearing the traffic to be transmitted.

The step S802 in which the transmitting end determines the positon of the bearing data block group for bearing the traffic to be transmitted includes:
The transmitting end determines, according to traffic bandwidth configuration, the number of the bearing slot for bearing the traffic to be transmitted.

Alternatively, the step S803 in which the transmitting end transmits the traffic to be transmitted according to the position of the bearing slot position and the position of the bearing data block group may include:
The transmitting end use a FLEXE data frame to carry the traffic to be transmitted according to the number of the bearing slot and the number of the bearing data block group, and sends the traffic to be transmitted to a receiving end with the FLEXE data frame.

### Embodiment four

Based on the embodiments described above, referring to FIG. 9, a traffic bearing method provided by an embodiment of the present invention is shown. The method may be applied to a receiving end in a FLEXE network structure shown in FIG. 1, and includes the following steps.

In step S901, the receiving end determines a position of a receiving data block group for bearing traffic to be received.

In step S902, the receiving end determines, in the position of the receiving data block group, a position of a receiving slot for bearing the traffic to be received, and extracts the traffic to be received at the position of the receiving slot.

Since the position of the slot and the position of the data block group may be separately represented by the slot number and the data block group number. For the receiving end, the step S901 in which the receiving end determines the position of the receiving data block group for bearing traffic to be received includes:
The receiving end determines, according to traffic bandwidth configuration, the receiving data block group number of the receiving data block group for transmitting the traffic to be received.

The step S902 in which the receiving end determines, in the position of the receiving data block group, the position of the receiving slot for bearing the traffic to be received, and extracts the traffic to be received at the position of the receiving slot includes:
if the receiving data block group number meets a preset receiving condition, the receiving end determines, in the receiving data block group corresponding to the receiving data block group number the receiving slot number of the receiving slot for bearing the traffic to be received according to traffic slot configuration, and obtains, according to the receiving slot number, the traffic to be received from the slot position corresponding to the receiving slot number.

### Embodiment five

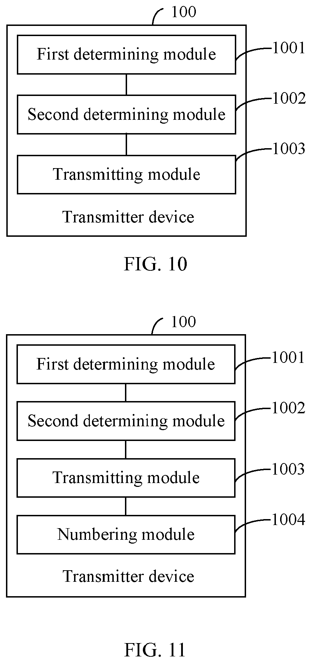

Based on the embodiments described above, referring to FIG. 10, a transmitter device 100 provided by an embodiment of the present invention is shown. The transmitter device 100 includes a first determining module 1001, a second determining module 1002 and a transmitting module 1003.

The first determining module 1001 is configured to determine a position of a bearing slot for bearing traffic to be transmitted.

The second determining module 1002 is configured to determine a position of a bearing data block group for bearing the traffic to be transmitted.

The transmitting module 1003 is configured to transmit, according to the position of the bearing slot and the position of the bearing data block group, the traffic to be transmitted.

In the solution described above, referring to FIG. 11, the device 100 also includes a numbering module 1004 configured to number slots in a calendar of a FLEXE protocol, and number data block groups within a coverage area of an overhead block.

In the solution described above, the first determining module 1001 is configured to determine, according to traffic slot configuration, the number of the bearing slot bearing the traffic to be transmitted.

In the solution described above, the second determining module 1002 is configured to determine, according to traffic bandwidth configuration, the number of the bearing data block group bearing the traffic to be transmitted.

In the solution described above, the transmitting module 1003 is configured to use a FLEXE data frame to carry the traffic to be transmitted according to the number of the bearing slot and the number of the bearing data block group, and send the traffic to be transmitted to a receiving end with the FLEXE data frame.

### Embodiment six

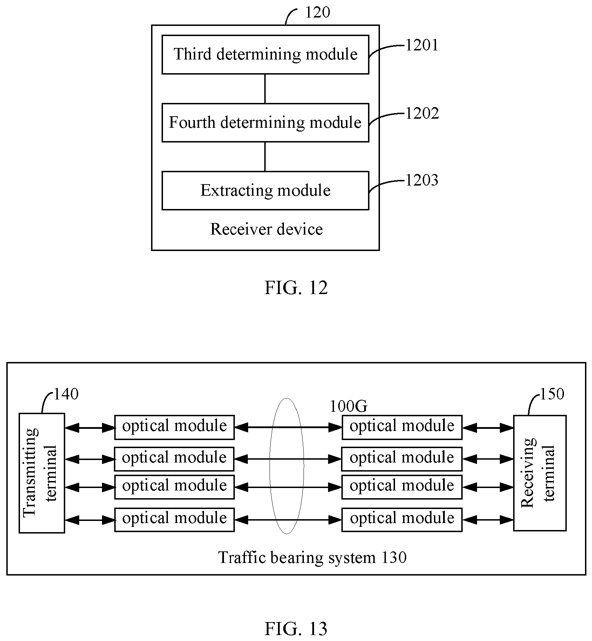

Based on the embodiments described above, referring to FIG. 12, a receiver device 120 provided by an embodiment of the present invention is shown. The receiver device 120 includes a third determining module 1201, a fourth determining module 1202 and an extracting module 1203.

The third determining module 1201 is configured to determine a position of a receiving data block group for bearing traffic to be received.

The fourth determining module 1202 is configured to determine, in the position of the receiving data block group, a position of a receiving slot for bearing the traffic to be received.

The extracting module 1203 is configured to extract the traffic to be received at the position of the receiving slot.

In the solution described above, the slot position and the data block group position are respectively represented by the slot number and the data block group number.

In the solution described above, the third determining module 1201 is configured to determine the receiving data block group number of the receiving data block group transmitting the traffic to be received.

In the solution described above, the fourth determining module 1202 is configured to, when the receiving data block group number meets a preset receiving condition, determine, in the receiving data block group corresponding to the receiving data block group number the receiving slot number of the receiving slot for bearing the traffic to be received according to traffic slot configuration.

The extracting module 1203 is configured to obtain, according to the receiving slot number, the traffic to be received from the corresponding slot position.

### Embodiment seven

Based on the embodiments described above, referring to FIG. 13, a traffic bearing system 130 provided by an embodiment of the present invention is shown. The system 130 includes a transmitter device 140 and a receiver device 150 in a FLEXE network structure.

The transmitter device 140 is configured to determine a position of a bearing slot for bearing traffic to be transmitted;
determine a position of a bearing data block group for bearing the traffic to be transmitted; and
transmit, according to the position of the bearing slot and the position of the bearing data block group, the traffic to be transmitted.

The receiver device 150 is configured to determine a position of a receiving data block group for bearing traffic to be received; and
determine, in the position of the receiving data block group, a position of a receiving slot for bearing the traffic to be received, and extract the traffic to be received at the receiving slot.

An embodiment of the present invention provides an electronic device, which may be the transmitting end or the receiving end described above. The electronic device includes a transceiver and a processor.

The transceiver may be used for data interaction, for example, the transmitting end may use the transceiver to perform data interaction with the receiving end, such as, transmitting traffic data.

The processor is connected to the transceiver. For example, the processor may be connected to the transceiver by a communication bus, such as an integrated circuit bus. Through computer-executable instructions such as instructions of the computer program, the processor may control the data transmission of the transceiver, and implement the traffic data transmission method provided by the above one or more technical solutions, for example, implement the method shown in FIGS. 6 and 9.

The processor may be an application processor (AP), a central processing unit (CPU), a digital signal processor (DSP), a field programmable gate array (FPGA) or an application specific integrated circuit.

The embodiments of the present invention further provide a computer storage medium, which is configured to store computer-executable instructions for executing one or more traffic data transmission methods described above.

The computer storage medium includes: a removable storage device, a read-only memory (ROM), a random access memory (RAM), a magnetic disk, an optical disk or other mediums capable of storing program codes.

Alternatively, the storage medium may be a non-transitory storage medium. The non-transitory storage medium here may also be called a non-volatile storage medium.

It should be understood by those skilled in the art that the embodiments of the present invention may be provided as methods, systems or computer program products. Therefore, the present disclosure may be embodied in the form of hardware, software, or a combination of hardware and software. In addition, the present disclosure may be embodied as a computer program product implemented on one or more computer-usable storage mediums (including, but not limited to, a disk memory, an optical memory and the like) storing computer-usable program codes.

The present invention is described with reference to flowcharts and/or block diagrams of methods, devices (systems) and computer program products according to the embodiments of the present invention. It should be understood that computer program instructions may implement each flow and/or block in the flowcharts and/or block diagrams and a combination of flows and/or blocks in the flowcharts and/or block diagrams. These computer program instructions may be provided to a general-purpose computer, a special-purpose computer, an embedded processor or a processor of another programmable data processing device to produce a machine so that instructions executed by a computer or a processor of other programmable data processing device produce an apparatus for implementing functions designated in one or more flows in the flowcharts and/or one or more blocks in the block diagrams.

These computer program instructions may also be stored in a computer-readable memory which can direct a computer or other programmable data processing device to operate in a particular manner so that the instructions stored in the computer-readable memory produce a manufacture product including an instructing apparatus. The instructing apparatus implements the functions designated in one or more flows in the flowcharts and/or one or more blocks in the block diagrams.

These computer program instructions may also be loaded onto a computer or other programmable data processing device so that a series of operations and steps are performed on the computer or other programmable device to produce processing implemented by the computer. Therefore, instructions executed on the computer or other programmable device provide steps for implementing the functions designated in one or more flows in the flowcharts and/or one or more blocks in the block diagrams.

The above are only preferred embodiments of the present disclosure and are not intended to limit the scope of the present disclosure.

### INDUSTRIAL APPLICABILITY

According to the method for transmitting traffic data in embodiments of the present invention, in addition to the bearing slots for bearing traffic data are configured, data block groups bearing traffic data are further provided. In this way, according to data amount and/or transmission requirements of the current traffic data, the slots and/or the data block groups may be flexibly selected to bear the traffic data, thereby meeting the data bearing and transmitting of different granularities, increasing the flexibility of the traffic data transmission and having positive industrial effects. The method is easy to be implemented, and can be widely spread in industry, and thus has strong industrial applicability.

## Claims

1. A method for transmitting traffic data, the method comprises:
determining (S601; S801), by a transmitting end, a position of a bearing slot for bearing traffic data to be transmitted;
determining (S602; S802), by the transmitting end, a position of a bearing data block group for bearing the traffic data to be transmitted; and
transmitting (S603; S803), by the transmitting end, the traffic data to be transmitted according to the position of the bearing slot and the position of the bearing data block group;
wherein before determining (S601; S801), by the transmitting end, the position of the bearing slot for bearing the traffic data to be transmitted, the method further comprises: numbering, by the transmitting end, slots in a calendar of a Flexible Ethernet, FlexE, protocol, and numbering data block groups within a coverage area of an overhead block;
wherein the FlexE protocol is used to bind multiple 100G transmission channels to form a transmission channel having a larger bandwidth speed, the FlexE protocol defines 20 slots on each 100G transmission channel, slots in the calendar of the FlexE protocol include slots on multiple 100G transmission channels and a bandwidth of each slot is 5G;
wherein the data block groups within the coverage area of the overhead block include 1023 data block groups, and each of the 1023 data block groups includes 20 66 bit data blocks representing 20 slots;
wherein the determining (S601; S801), by the transmitting end, the position of the bearing slot for bearing traffic data to be transmitted comprises: determining, by the transmitting end, according to traffic slot configuration, a slot number of the bearing slot for bearing the traffic data to be transmitted; and
wherein the determining (S602; S802), by the transmitting end, the position of the bearing data block group for bearing the traffic data to be transmitted comprises: determining, by the transmitting end, according to traffic bandwidth configuration, a data block group number of the bearing data block group for bearing the traffic data to be transmitted.

2. The method of claim 1, wherein the transmitting (S603; S803), by the transmitting end the traffic data to be transmitted according to the position of the bearing slot and the position of the bearing data block group comprises:
using a FlexE data frame, by the transmitting end, to carry the traffic data to be transmitted according to the slot number of the bearing slot and the data block group number of the bearing data block group, and sending the traffic data to be transmitted to a receiving end with the FlexE data frame.

3. A method for transmitting traffic data, the method comprises:
determining (S604; S901), by a receiving end, a position of a receiving data block group for bearing traffic to be received; and
determining (S605; S902), by the receiving end, in the receiving data block group, a position of a receiving slot for bearing the traffic to be received, and extracting the traffic to be received at the receiving slot;
wherein the receiving slot is a slot in slots in a calendar of a Flexible Ethernet, FlexE, protocol, the receiving data block group is a data block group in data block groups within a coverage area of an overhead block, the position of the slot is represented by a slot number, and the position of the data block group is represented by a data block group number;
wherein the FlexE protocol is used to bind multiple 100G transmission channels to form a transmission channel having a larger bandwidth speed, the FlexE protocol defines 20 slots on each 100G transmission channel, slots in the calendar of the FlexE protocol include slots on multiple 100G transmission channels and a bandwidth of each slot is 5G;
wherein the data block groups within the coverage area of the overhead block include 1023 data block groups, and each of the 1023 data block groups includes 20 66 bit data blocks representing 20 slots;
wherein the determining (S604; S901), by the receiving end, the position of the receiving data block group for bearing the traffic to be received comprises: determining, by the receiving end, according to traffic bandwidth configuration, the data block group number of the receiving data block group for transmitting the traffic to be received;
wherein the determining (S605; S902), by the receiving end, in the receiving data block group, the position of the receiving slot for bearing the traffic to be received, and extracting the traffic to be received at the receiving slot position comprises: in response to the data block group number meeting a preset receiving condition, determining, by the receiving end, in the receiving data block group corresponding to the data block group number, according to traffic slot configuration, the slot number of the receiving slot for bearing the traffic to be received, and obtaining, according to the slot number, the traffic to be received from the slot corresponding to the receiving slot number.

4. A transmitter device, the transmitter device comprises: a first determining module (1001), a second determining module (1002), and a transmitting module (1003); wherein
the first determining module (1001) is configured to determine a position of a bearing slot for bearing traffic data to be transmitted;
the second determining module (1002) is configured to determine a position of a bearing data block group for bearing the traffic data to be transmitted; and
the transmitting module (1003) is configured to transmit, according to the position of the bearing slot and the position of the bearing data block group, the traffic data to be transmitted;
the device further comprising a numbering module (1004), the numbering module (1004) is configured to number slots in a calendar of a Flexible Ethernet, FlexE, protocol, and number data block groups within a coverage area of an overhead block;
wherein the FlexE protocol is used to bind multiple 100G transmission channels to form a transmission channel having a larger bandwidth speed, the FlexE protocol defines 20 slots on each 100G transmission channel, slots in the calendar of the FlexE protocol include slots on multiple 100G transmission channels and a bandwidth of each slot is 5G;
wherein the data block groups within the coverage area of the overhead block include 1023 data block groups, and each of the 1023 data block groups includes 20 66 bit data blocks representing 20 slots;
wherein the first determining module (1001) is configured to determine the position of the bearing slot for bearing traffic data to be transmitted in the following manner: determining, according to traffic slot configuration, a slot number of the bearing slot for bearing the traffic data to be transmitted; and
wherein the second determining module (1002) is configured to determine the position of the bearing data block group for bearing the traffic data to be transmitted in the following manner: determining, according to traffic bandwidth configuration, a data block group number of the bearing data block group for bearing the traffic data to be transmitted.

5. The device of claim 4,
wherein the transmitting module (1003) is configured to transmit, according to the position of the bearing slot and the position of the bearing data block group, the traffic data to be transmitted in the following manner: using a FlexE data frame to carry the traffic data to be transmitted according to the slot number of the bearing slot and the data block group number of the bearing data block group, and sending the traffic data to be transmitted to a receiving end with the FlexE data frame.

6. A receiver device, the receiver device comprises: a third determining module (1201), a fourth determining module (1202), and an extracting module (1203); wherein
the third determining module (1201) is configured to determine a position of a receiving data block group for bearing traffic to be received;
the fourth determining module (1202) is configured to determine, in the receiving data block group, a position of a receiving slot for bearing the traffic to be received; and
the extracting module (1203) is configured to extract the traffic to be received at the receiving slot,
wherein the receiving slot is a slot in slots in a calendar of a Flexible Ethernet, FlexE, protocol, the receiving data block group is a data block group in data block groups within a coverage area of an overhead block, the position of the slot is represented by a slot number, and the position of the data block group is represented by a data block group number;
wherein the FlexE protocol is used to bind multiple 100G transmission channels to form a transmission channel having a larger bandwidth speed, the FlexE protocol defines 20 slots on each 100G transmission channel, slots in the calendar of the FlexE protocol include slots on multiple 100G transmission channels and a bandwidth of each slot is 5G;
wherein the data block groups within the coverage area of the overhead block include 1023 data block groups, and each of the 1023 data block groups includes 20 66 bit data blocks representing 20 slots;
wherein the third determining module (1201) is configured to determine the position of the receiving data block group for bearing traffic to be received in the following manner: determining, according to traffic bandwidth configuration, the data block group number of the receiving data block group for bearing the traffic to be received,
wherein the fourth determining module (1202) is configured to determine, in the receiving data block group, the position of the receiving slot for bearing the traffic to be received in the following manner: in response to the data block group number meeting a preset receiving condition, determining, in the receiving data block group corresponding to the receiving data block group number, according to traffic slot configuration, the slot number of the receiving slot for bearing the traffic to be received,
wherein the extracting module (1203) is configured to extract the traffic to be received at the receiving slot in the following manner: obtain, according to the slot number, the traffic to be received from the receiving slot corresponding to the receiving slot number.

## Patentansprüche

1. Verfahren zur Übertragung von Verkehrsdaten, wobei das Verfahren Folgendes umfasst:
Bestimmen (S601; S801) einer Position eines Tragschlitzes durch eine übertragende Seite zum Tragen von zu übertragenden Verkehrsdaten;
Bestimmen (S602; S802) einer Position einer Tragdatenblockgruppe durch die übertragende Seite zum Tragen der zu übertragenden Verkehrsdaten; und
Übertragen (S603; S803) der zu übertragenden Verkehrsdaten durch die übertragende Seite gemäß der Position des Tragschlitzes und der Position der Tragdatenblockgruppe;
wobei das Verfahren vor dem Bestimmen (S601; S801) der Position des Tragschlitzes durch die übertragende Seite zum Tragen der zu übertragenden Verkehrsdaten ferner Folgendes umfasst:
Nummerieren von Schlitzen in einem Kalender eines Flexible-Ethernet(FlexE)-Protokolls durch die übertragende Seite und Nummerieren von Datenblockgruppen innerhalb eines Abdeckungsbereichs eines Overhead-Blocks;
wobei das FlexE-Protokoll verwendet wird, um mehrere 100G-Übertragungskanäle zu bündeln, um einen Übertragungskanal auszubilden, der eine höhere Bandbreitengeschwindigkeit aufweist, wobei das FlexE-Protokoll 20 Schlitze auf jedem 100G-Übertragungskanal definiert, die Schlitze im Kalender des FlexE-Protokolls Schlitze auf mehreren 100G-Übertragungskanälen beinhalten und eine Bandbreite jedes Schlitzes 5G beträgt;
wobei die Datenblockgruppen innerhalb des Abdeckungsbereichs des Overhead-Blocks 1023 Datenblockgruppen beinhalten und jede der 1023 Datenblockgruppen 20 66-Bit-Datenblöcke beinhaltet, die 20 Slots darstellen;
wobei das Bestimmen (S601; S801) der Position des Tragschlitzes durch die übertragende Seite zum Tragen von zu übertragenden Verkehrsdaten Folgendes umfasst: Bestimmen einer Schlitznummer des Tragschlitzes durch die übertragende Seite gemäß der Verkehrsschlitzkonfiguration zum Tragen der zu übertragenden Verkehrsdaten; und
wobei das Bestimmen (S602; S802) der Position der Tragdatenblockgruppe durch die übertragende Seite zum Tragen der zu übertragenden Verkehrsdaten Folgendes umfasst: Bestimmen einer Datenblockgruppennummer der Tragdatenblockgruppe durch die übertragende Seite gemäß der Verkehrsbandbreitenkonfiguration zum Tragen der zu übertragenden Verkehrsdaten.

2. Verfahren nach Anspruch 1, wobei das Übertragen (S603; S803) der zu übertragenden Verkehrsdaten durch die übertragende Seite gemäß der Position des Tragschlitzes und der Position der Tragdatenblockgruppe Folgendes umfasst:
Verwenden eines FlexE-Datenrahmens durch die übertragende Seite, um die zu übertragenden Verkehrsdaten gemäß der Schlitznummer des Tragschlitzes und der Datenblockgruppennummer der Tragdatenblockgruppe zu transportieren, und Senden der zu übertragenden Verkehrsdaten an eine empfangende Seite mit dem FlexE-Datenrahmen.

3. Verfahren zur Übertragung von Verkehrsdaten, wobei das Verfahren Folgendes umfasst:
Bestimmen (S604; S901) einer Position einer Empfangsdatenblockgruppe durch eine empfangende Seite zum Tragen von zu empfangendem Verkehr; und
Bestimmen (S605; S902) einer Position eines Empfangsschlitzes durch die empfangende Seite in der Empfangsdatenblockgruppe zum Tragen des zu empfangenden Verkehrs und Extrahieren des zu empfangenden Verkehrs an dem Empfangsschlitz;
wobei der Empfangsschlitz ein Schlitz in Schlitzen in einem Kalender eines Flexible-Ethernet(FlexE)-Protokolls ist, die Empfangsdatenblockgruppe eine Datenblockgruppe in Datenblockgruppen innerhalb eines Abdeckungsbereichs eines Overhead-Blocks ist, die Position des Schlitzes durch eine Schlitznummer dargestellt wird und die Position der Datenblockgruppe durch eine Datenblockgruppennummer dargestellt wird;
wobei das FlexE-Protokoll verwendet wird, um mehrere 100G-Übertragungskanäle zu bündeln, um einen Übertragungskanal auszubilden, der eine höhere Bandbreitengeschwindigkeit aufweist, wobei das FlexE-Protokoll 20 Schlitze auf jedem 100G-Übertragungskanal definiert, die Schlitze im Kalender des FlexE-Protokolls Schlitze auf mehreren 100G-Übertragungskanälen beinhalten und eine Bandbreite jedes Schlitzes 5G beträgt;
wobei die Datenblockgruppen innerhalb des Abdeckungsbereichs des Overhead-Blocks 1023 Datenblockgruppen beinhalten und jede der 1023 Datenblockgruppen 20 66-Bit-Datenblöcke beinhaltet, die 20 Slots darstellen;
wobei das Bestimmen (S604; S901) der Position der Empfangsdatenblockgruppe durch die empfangende Seite zum Tragen des zu empfangenden Verkehrs Folgendes umfasst: Bestimmen der Datenblockgruppennummer der Empfangsdatenblockgruppe durch die empfangende Seite gemäß der Verkehrsbandbreitenkonfiguration zum Übertragen des zu empfangenden Verkehrs;
wobei das Bestimmen (S605; S902) der Position des Empfangsschlitzes durch die empfangende Seite in der Empfangsdatenblockgruppe zum Tragen des zu empfangenden Verkehrs und das Extrahieren des zu empfangenden Verkehrs an der Empfangsschlitzposition Folgendes umfasst: als Reaktion darauf, dass die Datenblockgruppennummer eine voreingestellte Empfangsbedingung erfüllt, Bestimmen der Schlitznummer des Empfangsschlitzes durch die empfangende Seite in der Empfangsdatenblockgruppe, die der Datenblockgruppennummer entspricht, gemäß der Verkehrsschlitzkonfiguration zum Tragen des zu empfangenden Verkehrs und Erhalten des zu empfangenden Verkehrs von dem Schlitz, der der Empfangsschlitznummer entspricht, gemäß der Schlitznummer.

4. Sendevorrichtung, wobei die Sendevorrichtung Folgendes umfasst: ein erstes Bestimmungsmodul (1001), ein zweites Bestimmungsmodul (1002) und ein Übertragungsmodul (1003); wobei das erste Bestimmungsmodul (1001) dazu konfiguriert ist, eine Position eines Tragschlitzes zum Tragen von zu übertragenden Verkehrsdaten zu bestimmen;
das zweite Bestimmungsmodul (1002) dazu konfiguriert ist, eine Position einer Tragdatenblockgruppe zum Tragen der zu übertragenden Verkehrsdaten zu bestimmen; und
das Übertragungsmodul (1003) dazu konfiguriert ist, die zu übertragenden Verkehrsdaten gemäß der Position des Tragschlitzes und der Position der Tragdatenblockgruppe zu übertragen;
wobei die Vorrichtung ferner ein Nummerierungsmodul (1004) umfasst, wobei das Nummerierungsmodul (1004) dazu konfiguriert ist, Schlitze in einem Kalender eines Flexible-Ethernet(FlexE)-Protokolls zu nummerieren und Datenblockgruppen innerhalb eines Abdeckungsbereichs eines Overhead-Blocks zu nummerieren;
wobei das FlexE-Protokoll verwendet wird, um mehrere 100G-Übertragungskanäle zu bündeln, um einen Übertragungskanal auszubilden, der eine höhere Bandbreitengeschwindigkeit aufweist, wobei das FlexE-Protokoll 20 Schlitze auf jedem 100G-Übertragungskanal definiert, die Schlitze im Kalender des FlexE-Protokolls Schlitze auf mehreren 100G-Übertragungskanälen beinhalten und eine Bandbreite jedes Schlitzes 5G beträgt;
wobei die Datenblockgruppen innerhalb des Abdeckungsbereichs des Overhead-Blocks 1023 Datenblockgruppen beinhalten und jede der 1023 Datenblockgruppen 20 66-Bit-Datenblöcke beinhaltet, die 20 Slots darstellen;
wobei das erste Bestimmungsmodul (1001) dazu konfiguriert ist, die Position des Tragschlitzes zum Tragen von zu übertragenden Verkehrsdaten auf folgende Weise zu bestimmen: Bestimmen einer Schlitznummer des Tragschlitzes gemäß der Verkehrsschlitzkonfiguration zum Tragen der zu übertragenden Verkehrsdaten; und
wobei das zweite Bestimmungsmodul (1002) dazu konfiguriert ist, die Position der Tragdatenblockgruppe zum Tragen der zu übertragenden Verkehrsdaten auf folgende Weise zu bestimmen: Bestimmen einer Datenblockgruppennummer der Tragdatenblockgruppe gemäß der Verkehrsbandbreitenkonfiguration zum Tragen der zu übertragenden Verkehrsdaten.

5. Vorrichtung nach Anspruch 4,
wobei das Übertragungsmodul (1003) dazu konfiguriert ist, die zu übertragenden Verkehrsdaten gemäß der Position des Tragschlitzes und der Position der Tragdatenblockgruppe auf folgende Weise zu übertragen: Verwenden eines FlexE-Datenrahmens zum Transportieren der zu übertragenden Verkehrsdaten gemäß der Schlitznummer des Tragschlitzes und der Datenblockgruppennummer der Tragdatenblockgruppe und Senden der zu übertragenden Verkehrsdaten an eine empfangende Seite mit dem FlexE-Datenrahmen.

6. Empfangsvorrichtung, wobei die Empfangsvorrichtung Folgendes umfasst: ein drittes Bestimmungsmodul (1201), ein viertes Bestimmungsmodul (1202) und ein Extraktionsmodul (1203); wobei das dritte Bestimmungsmodul (1201) dazu konfiguriert ist, eine Position einer Empfangsdatenblockgruppe zum Tragen von zu empfangendem Verkehr zu bestimmen;
das vierte Bestimmungsmodul (1202) dazu konfiguriert ist, in der Empfangsdatenblockgruppe eine Position eines Empfangsschlitzes zum Tragen des zu empfangenden Verkehrs zu bestimmen; und
das Extraktionsmodul (1203) dazu konfiguriert ist, den zu empfangenden Verkehr an dem Empfangsschlitz zu extrahieren, wobei der Empfangsschlitz ein Schlitz in Schlitzen in einem Kalender eines Flexible-Ethernet(FlexE)-Protokolls ist, die Empfangsdatenblockgruppe eine Datenblockgruppe in Datenblockgruppen innerhalb eines Abdeckungsbereichs eines Overhead-Blocks ist, die Position des Schlitzes durch eine Schlitznummer dargestellt wird und die Position der Datenblockgruppe durch eine Datenblockgruppennummer dargestellt wird;
wobei das FlexE-Protokoll verwendet wird, um mehrere 100G-Übertragungskanäle zu bündeln, um einen Übertragungskanal auszubilden, der eine höhere Bandbreitengeschwindigkeit aufweist, wobei das FlexE-Protokoll 20 Schlitze auf jedem 100G-Übertragungskanal definiert, die Schlitze im Kalender des FlexE-Protokolls Schlitze auf mehreren 100G-Übertragungskanälen beinhalten und eine Bandbreite jedes Schlitzes 5G beträgt; wobei die Datenblockgruppen innerhalb des Abdeckungsbereichs des Overhead-Blocks 1023 Datenblockgruppen beinhalten und jede der 1023 Datenblockgruppen 20 66-Bit-Datenblöcke beinhaltet, die 20 Slots darstellen;
wobei das dritte Bestimmungsmodul (1201) dazu konfiguriert ist, die Position der Empfangsdatenblockgruppe zum Tragen von zu empfangendem Verkehr auf folgende Weise zu bestimmen: Bestimmen der Datenblockgruppennummer der Empfangsdatenblockgruppe gemäß der Verkehrsbandbreitenkonfiguration zum Tragen des zu empfangenden Verkehrs,
wobei das vierte Bestimmungsmodul (1202) dazu konfiguriert ist, in der Empfangsdatenblockgruppe die Position des Empfangsschlitzes zum Tragen des zu empfangenden Verkehrs auf folgende Weise zu bestimmen: als Reaktion darauf, dass die Datenblockgruppennummer eine voreingestellte Empfangsbedingung erfüllt, Bestimmen der Schlitznummer des Empfangsschlitzes in der Empfangsdatenblockgruppe, die der Empfangsdatenblockgruppennummer entspricht, gemäß der Verkehrsschlitzkonfiguration zum Tragen des zu empfangenden Verkehrs,
wobei das Extraktionsmodul (1203) dazu konfiguriert ist, den an dem Empfangsschlitz zu empfangenden Verkehr auf folgende Weise zu extrahieren: Erhalten des zu empfangenden Verkehrs von dem Empfangsschlitz, der der Empfangsschlitznummer entspricht, gemäß der Schlitznummer.

## Revendications

1. Procédé de transmission de données de trafic, le procédé comprend :
la détermination (S601 ; S801), par une extrémité de transmission, d'une position d'un créneau de support pour porter des données de trafic à transmettre ;
la détermination (S602 ; S802), par l'extrémité de transmission, d'une position d'un groupe de blocs de données de support pour porter les données de trafic à transmettre ; et
la transmission (S603 ; S803), par l'extrémité de transmission, des données de trafic à transmettre selon la position du créneau de support et la position du groupe de blocs de données de support;
dans lequel, avant la détermination (S601 ; S801), par l'extrémité de transmission, de la position du créneau de support pour transporter les données de trafic à transmettre, le procédé comprend en outre : la numérotation, par l'extrémité de transmission, de créneaux dans un calendrier d'un protocole Flexible Ethernet, FlexE, et la numérotation de groupes de blocs de données dans une zone de couverture d'un bloc de surdébit ;
dans lequel le protocole FlexE est utilisé pour lier de multiples canaux de transmission 100G afin de former un canal de transmission ayant une vitesse de bande passante plus grande, le protocole FlexE définit 20 créneaux sur chaque canal de transmission 100G, les créneaux dans le calendrier du protocole FlexE comportent des créneaux sur de multiples canaux de transmission 100G et une bande passante de chaque créneau est de 5G ;
dans lequel les groupes de blocs de données dans la zone de couverture du bloc de surdébit comportent 1 023 groupes de blocs de données, et chacun des 1 023 groupes de blocs de données comporte 20 blocs de données de 66 bits représentant 20 créneaux ;
dans lequel la détermination (S601 ; S801), par l'extrémité de transmission, de la position du créneau de support pour porter des données de trafic à transmettre comprend : la détermination, par l'extrémité de transmission, selon une configuration de créneau de trafic, d'un numéro de créneau du créneau de support pour porter les données de trafic à transmettre ; et
dans lequel la détermination (S602 ; S802), par l'extrémité de transmission, de la position du groupe de blocs de données de support pour porter les données de trafic à transmettre comprend : la détermination, par l'extrémité de transmission, selon une configuration de bande passante de trafic, d'un numéro de groupe de blocs de données du groupe de blocs de données de support pour porter les données de trafic à transmettre.

2. Procédé selon la revendication 1, dans lequel la transmission (S603 ; S803), par l'extrémité de transmission, des données de trafic à transmettre selon la position du créneau de support et la position du groupe de blocs de données de support, comprend : l'utilisation d'une trame de données FlexE, par l'extrémité de transmission, pour transporter les données de trafic à transmettre selon le numéro de créneau du créneau de support et le numéro de groupe de blocs de données du groupe de blocs de données de support, et l'envoi des données de trafic à transmettre à une extrémité de réception avec la trame de données FlexE.

3. Procédé de transmission de données de trafic, le procédé comprend :
la détermination (S604 ; S901), par une extrémité de réception, d'une position d'un groupe de blocs de données de réception pour porter un trafic à recevoir ; et
la détermination (S605 ; S902), par l'extrémité de réception, dans le groupe de blocs de données de réception, d'une position d'un créneau de réception pour porter le trafic à recevoir, et l'extraction du trafic à recevoir au niveau du créneau de réception ;
dans lequel le créneau de réception est un créneau parmi des créneaux dans un calendrier d'un protocole Flexible Ethernet, FlexE, le groupe de blocs de données de réception est un groupe de blocs de données parmi des groupes de blocs de données dans une zone de couverture d'un bloc de surdébit, la position du créneau est représentée par un numéro de créneau et la position du groupe de blocs de données est représentée par un numéro de groupe de blocs de données ;
dans lequel le protocole FlexE est utilisé pour lier de multiples canaux de transmission 100G afin de former un canal de transmission ayant une vitesse de bande passante plus grande, le protocole FlexE définit 20 créneaux sur chaque canal de transmission 100G, les créneaux dans le calendrier du protocole FlexE comportent des créneaux sur de multiples canaux de transmission 100G et une bande passante de chaque créneau est de 5G ;
dans lequel les groupes de blocs de données dans la zone de couverture du bloc de surdébit comportent 1 023 groupes de blocs de données, et chacun des 1 023 groupes de blocs de données comporte 20 blocs de données de 66 bits représentant 20 créneaux ;
dans lequel la détermination (S604 ; S901), par l'extrémité de réception, de la position du groupe de blocs de données de réception pour porter le trafic à recevoir comprend : la détermination, par l'extrémité de réception, selon une configuration de bande passante de trafic, du numéro de groupe de blocs de données du groupe de blocs de données de réception pour transmettre le trafic à recevoir ;
dans lequel la détermination (S605 ; S902), par l'extrémité de réception, dans le groupe de blocs de données de réception, de la position du créneau de réception pour porter le trafic à recevoir, et l'extraction du trafic à recevoir au niveau de la position de créneau de réception comprennent : en réponse au numéro de groupe de blocs de données répondant à une condition de réception prédéfinie, la détermination, par l'extrémité de réception, dans le groupe de blocs de données de réception correspondant au numéro de groupe de blocs de données, selon une configuration de créneau de trafic, du numéro de créneau du créneau de réception pour porter le trafic à recevoir, et l'obtention, selon le numéro de créneau, du trafic à recevoir à partir du créneau correspondant au numéro de créneau de réception.

4. Dispositif transmetteur, le dispositif transmetteur comprend : un premier module de détermination (1001), un deuxième module de détermination (1002) et un module de transmission (1003) ; dans lequel
le premier module de détermination (1001) est configuré pour déterminer une position d'un créneau de support pour porter des données de trafic à transmettre ;
le deuxième module de détermination (1002) est configuré pour déterminer une position d'un groupe de blocs de données de support pour porter les données de trafic à transmettre ; et
le module de transmission (1003) est configuré pour transmettre, selon la position du créneau de support et la position du groupe de blocs de données de support, les données de trafic à transmettre ;
le dispositif comprenant en outre un module de numérotation (1004), le module de numérotation (1004) est configuré pour numéroter des créneaux dans un calendrier d'un protocole Flexible Ethernet, FlexE, et numéroter des groupes de blocs de données dans une zone de couverture d'un bloc de surdébit ;
dans lequel le protocole FlexE est utilisé pour lier de multiples canaux de transmission 100G afin de former un canal de transmission ayant une vitesse de bande passante plus grande, le protocole FlexE définit 20 créneaux sur chaque canal de transmission 100G, les créneaux dans le calendrier du protocole FlexE comportent des créneaux sur de multiples canaux de transmission 100G et une bande passante de chaque créneau est de 5G ;
dans lequel les groupes de blocs de données dans la zone de couverture du bloc de surdébit comportent 1 023 groupes de blocs de données, et chacun des 1 023 groupes de blocs de données comporte 20 blocs de données de 66 bits représentant 20 créneaux ;
dans lequel le premier module de détermination (1001) est configuré pour déterminer la position du créneau de support pour porter des données de trafic à transmettre de la manière suivante : la détermination, selon une configuration de créneau de trafic, d'un numéro de créneau du créneau de support pour porter les données de trafic à transmettre ; et
dans lequel le deuxième module de détermination (1002) est configuré pour déterminer la position du groupe de blocs de données de support pour porter les données de trafic à transmettre de la manière suivante : la détermination, selon une configuration de bande passante de trafic, d'un numéro de groupe de blocs de données du groupe de blocs de données de support pour porter les données de trafic à transmettre.

5. Dispositif selon la revendication 4,
dans lequel le module de transmission (1003) est configuré pour transmettre, selon la position du créneau de support et la position du groupe de blocs de données de support, les données de trafic à transmettre de la manière suivante : l'utilisation d'une trame de données FlexE pour transporter les données de trafic à transmettre selon le numéro de créneau du créneau de support et le numéro de groupe de blocs de données du groupe de blocs de données de support, et l'envoi des données de trafic à transmettre à une extrémité de réception avec la trame de données FlexE.

6. Dispositif récepteur, le dispositif récepteur comprend : un troisième module de détermination (1201), un quatrième module de détermination (1202) et un module d'extraction (1203) ; dans lequel
le troisième module de détermination (1201) est configuré pour déterminer une position d'un groupe de blocs de données de réception pour porter un trafic à recevoir ;
le quatrième module de détermination (1202) est configuré pour déterminer, dans le groupe de blocs de données de réception, une position d'un créneau de réception pour porter le trafic à recevoir ; et
le module d'extraction (1203) est configuré pour extraire le trafic à recevoir au niveau du créneau de réception,
dans lequel le créneau de réception est un créneau parmi des créneaux dans un calendrier d'un protocole Flexible Ethernet, FlexE, le groupe de blocs de données de réception est un groupe de blocs de données parmi des groupes de blocs de données dans une zone de couverture d'un bloc de surdébit, la position du créneau est représentée par un numéro de créneau et la position du groupe de blocs de données est représentée par un numéro de groupe de blocs de données ;
dans lequel le protocole FlexE est utilisé pour lier de multiples canaux de transmission 100G afin de former un canal de transmission ayant une vitesse de bande passante plus grande, le protocole FlexE définit 20 créneaux sur chaque canal de transmission 100G, les créneaux dans le calendrier du protocole FlexE comportent des créneaux sur de multiples canaux de transmission 100G et une bande passante de chaque créneau est de 5G ;
dans lequel les groupes de blocs de données dans la zone de couverture du bloc de surdébit comportent 1 023 groupes de blocs de données, et chacun des 1 023 groupes de blocs de données comporte 20 blocs de données de 66 bits représentant 20 créneaux ;
dans lequel le troisième module de détermination (1201) est configuré pour déterminer la position du groupe de blocs de données de réception pour porter un trafic à recevoir de la manière suivante : la détermination, selon une configuration de bande passante de trafic, du numéro de groupe de blocs de données du groupe de blocs de données de réception pour porter le trafic à recevoir,
dans lequel le quatrième module de détermination (1202) est configuré pour déterminer, dans le groupe de blocs de données de réception, la position du créneau de réception pour porter le trafic à recevoir de la manière suivante : en réponse au numéro de groupe de blocs de données répondant à une condition de réception prédéfinie, la détermination, dans le groupe de blocs de données de réception correspondant au numéro de groupe de blocs de données de réception, selon une configuration de créneau de trafic, du numéro de créneau du créneau de réception pour porter le trafic à recevoir,
dans lequel le module d'extraction (1203) est configuré pour extraire le trafic à recevoir au niveau du créneau de réception de la manière suivante : obtenir, selon le numéro de créneau, le trafic à recevoir à partir du créneau de réception correspondant au numéro de créneau de réception.
